# EUROPÄISCHE PATENTANMELDUNG

(11) **EP 4 538 904 A1**
(43) Veröffentlichungstag der Anmeldung: **16.04.2025**
(21) Anmeldenummer: 24203580.6
(22) Anmeldetag: 30.09.2024
(51) Int. Cl.: G06F 16/901, G06N 20/00

(54) **VERFAHREN ZUM BEREITSTELLEN VON TRAININGSDATEN FÜR EINE COMPUTERGESTÜTZTE ANWENDUNG MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(30) Priorität: 09.10.2023 DE 102023209812
(71) Anmelder: Siemens Aktiengesellschaft, 80333 München (DE)
(72) Erfinder: Krompaß, Denis, 85591 Vaterstetten (DE); Spieckermann, Sigurd, 21614 Buxtehude (DE); Boulouednine, Hjalmar, 12205 Berlin (DE)
(74) Vertreter: Siemens Patent Attorneys

(57) **Zusammenfassung**

Die Erfindung betrifft ein Verfahren zum Bereitstellen von Trainingsdaten (32) für eine computergestützte Anwendung (34, 36) mittels einer elektronischen Recheneinrichtung (10), mit den Schritten: Empfangen von Rohdatendaten (12, 14) von zumindest einem Dateneigentümer (16, 18) mittels einer Empfangseinrichtung (28) der elektronischen Recheneinrichtung (10); (S1) Homogenisieren der empfangenen Rohdaten (12, 14) mittels der elektronischen Recheneinrichtung (10); (S3) Speichern der homogenisierten Daten (22) in einer Datenbank (24) der elektronischen Recheneinrichtung (10); (S4) und Bereitstellen der homogenisierten Daten (22) als Trainingsdaten (32) zum Abrufen für eine computergestützte Anwendung (34, 36) mittels der elektronischen Recheneinrichtung (10). (S5) Ferner betrifft die Erfindung ein Computerprogrammprodukt ein computerlesbares Speichermedium sowie eine elektronische Recheneinrichtung (10) .

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Bereitstellen von Trainingsdaten für eine computergestützte Anwendung mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Mit den jüngsten Entwicklungen im Bereich der künstlichen Intelligenz (KI), vor allem mit Foundation Models, ist es offensichtlicher denn je geworden, dass eine angemessene Strategie, Infrastruktur und Softwarearchitektur für die Datenkonsolidierung und -weitergabe zum Zweck des KI-Trainings ein Muss für Unternehmen ist, die KI-gesteuerte Lösungen und Produkte anbieten wollen. Im Gegensatz zur Internetbranche, die ausschließlich in der digitalen Welt operiert, in der Daten im Überfluss vorhanden, zugänglich und automatisch gespeichert sind, sind Unternehmen hauptsächlich in der physischen Welt tätig, in der die Daten vielfältiger und schwieriger zu erfassen sind, da sie nicht automatisch gespeichert oder leicht zugänglich sind. Um diese Situation zu verbessern, werden derzeit große Anstrengungen unternommen, um die physische mit der digitalen Welt zu verbinden, indem die Mittel bereitgestellt werden, um die in der physischen Welt erzeugten Daten systematisch zu erfassen und aufzubewahren und sie für eine nachgeschaltete Wertschöpfungskette zugänglich zu machen.

Gegenwärtig finden die Bemühungen um die Verbindung der physischen mit der digitalen Welt in einer stark verteilten und isolierten Weise statt, die oft von spezifischen Anwendungsfällen angetrieben wird. Dies führt natürlich zu isolierten digitalen Datensilos, die nicht alle Potenziale erschließen können, schon gar nicht die große industrielle KI-Revolution, da nur die Kombination von Daten aus mehreren Silos die Entwicklung von Technologien ermöglichen wird. entsprechenden Die Dateneigentümer sind über das gesamte Unternehmen verstreut und hosten die Daten auf lokalen Servern, in der Cloud, in verschiedenen Inkarnationen von Datenbanken und sogar auf Personalcomputern. Außerdem sind dies Daten nicht katalogisiert, und die Daten sind nicht so leicht zugänglich wie z. B. ein Teil eines riesigen zentralen Datensees. In jüngster Zeit wird versucht, dieses Problem durch den Aufbau von Datenplattformen zu entschärfen, die Daten aus verschiedenen Silos vereinheitlichen und strukturieren, z. B. mithilfe von Knowledge-Graph-Technologien. Diese Arbeit ist jedoch arbeitsintensiv und hat noch nicht das Niveau erreicht, um den aktuellen Arbeitsablauf von Dateningenieuren zu beeinflussen, die Daten für den Aufbau von KI-Systemen in einer breiten Palette von Anwendungsfällen vorbereiten.

Schätzungen zufolge verbringen Data Scientists beim Aufbau einer KI-Lösung etwa 80 % ihrer Zeit mit Data-Engineering-Aufgaben, einschließlich Datenerfassung, -bereinigung und - analyse. Mit dem zunehmenden Verständnis für die Entwicklung von KI-Produkten kommen auch allgemeine Themen der Softwaretechnik wie Robustheit, Reproduzierbarkeit und Rückverfolgbarkeit hinzu, wodurch die Rolle eines Data Engineers vollständig umrissen wird. Obwohl die Aufgaben dieser Rolle recht klar sind, ist der spezifische Arbeitsablauf bei weitem noch nicht eindeutig festgelegt. Ein Hauptgrund dafür ist das hohe Maß an Variation und Auswahlmöglichkeiten, mit denen ein Data Engineer konfrontiert ist. Dies ist auf die große Vielfalt an Datenquelleneigenschaften in Kombination mit einer riesigen Tooling-Landschaft zurückzuführen, die im Zuge der Big-Data-Ära entstanden ist. Infolgedessen ist es keine große Überraschung, dass die meisten Data Engineers ihre eigenen Methoden und Tools entwickelt haben, um ihre Rolle zu erfüllen.

Eine zentralisierte Dateninfrastruktur mit einem klar definierten Prozess für eine einheitliche Strategie zur Datenintegration, -verwaltung und -verteilung würde das Aufbrechen der Datensilos enorm erleichtern und das Vertrauen und die Akzeptanz erhöhen. Darüber hinaus würde sie es den Dateningenieuren ermöglichen, einen einheitlichen Ansatz für die Speicherung, gemeinsame Nutzung und Pflege von Datenartefakten in ihren Arbeitsablauf zu integrieren. Allerdings gibt es keinen Prozess oder eine Plattform, die allen Anforderungen gerecht wird. Dies spiegelt sich auch in der Tatsache wider, dass trotz der Existenz von Plattformen unternehmensweit neue Dateninitiativen ins Leben gerufen werden.

Was bei den verschiedenen Konzepten zur Datenkonsolidierung und -freigabe, wie z. B. Datenseen (Data Lakes) oder Datenplattformen, fehlt, ist die Tatsache, dass sie sich ausschließlich auf einige Vertreter der Daten konzentrieren: die Speicherarchitektur, ETL-Werkzeuge für Daten und den potenziellen Wert der angeschlossenen Anwendungen. Diese Konzepte berücksichtigen jedoch nicht die konkrete Entwicklung des Datenartefakts selbst, das auf der Datenplattform erstellt oder gespeichert werden könnte und das die Grundlage für die Wertschöpfung einer datengesteuerten nachgelagerten Anwendung darstellt. Insbesondere der Quellcode, der dem Arbeitsablauf des Data Engineers ähnelt, der Datenartefakte lädt, erstellt und speichert (z. B. über CI (Continues Integration)). Darüber hinaus müssen wir angesichts der zunehmenden Regulierung des Einsatzes von KI-Produkten die Entwicklung von Datenartefakten vereinheitlichen und sie im Hinblick auf Governance, Robustheit, Rückverfolgbarkeit und Reproduzierbarkeit reifen lassen, die zu den etablierten Praktiken des klassischen Software-Engineering gehören.

Aufgabe der vorliegenden Erfindung ist es ein Verfahren, ein Computerprogrammprodukt, ein computerlesbares Speichermedium sowie eine elektronische Recheneinrichtung zu schaffen, mittels welchen verbessert Trainingsdaten für computergestützte Anwendungen bereitgestellt werden können.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bereitstellen von Trainingsdaten für eine computergestützte Anwendung mittels einer elektronischen Recheneinrichtung. Es wird zumindest Rohdaten von zumindest einem Dateneigentümer mittels einer Empfangseinrichtung der elektronischen Recheneinrichtung empfangen. Es erfolgt das Homogenisieren der empfangenen Rohdaten mittels der elektronischen Recheneinrichtung. Die homogenisierten Daten werden in einer Datenbank der elektronischen Recheneinrichtung abgespeichert. Es erfolgt dann das Bereitstellen der homogenisierten Daten als Trainingsdaten zum Abrufen für eine computergestützte Anwendung mittels der elektronischen Recheneinrichtung.

Insbesondere kann somit eine Vielzahl von Trainingsdaten, welche bereits vorher homogenisiert sind, für eine computergestützte Anwendung bereitgestellt werden. Insbesondere kann hierbei die computergestützte Anwendung, beziehungsweise ein Nutzer/Data Scientist für die computergestützte Anwendung, der die computergestützte Anwendung programmieren möchte, auf die Trainingsdaten zurückgreifen. Mit anderen Worten kann aus der homogenisierten Datenbank auf die Trainingsdaten zum beispielsweise Trainieren von einer computergestützten Anwendung zurückgegriffen werden.

Insbesondere ist somit ein einheitliches Konzept für eine Infrastruktur und ein Prozess zur Aufbewahrung und gemeinsamen Nutzen von Daten vorgeschlagen, dass sich an dem aktuellen und zukünftigen Arbeitsablaufen von Dateningenieuren orientiert, aber flexibel genug ist, um in die meisten aktuellen und zukünftigen Datensilos, welche insbesondere den Dateneigentümern entspricht, integriert zu werden. Auf diese Weise können siloübergreifende Daten konsolidiert, durchsucht und neu kombiniert werden, um ihr Potential für beispielsweise industrielle künstliche Intelligenz-Anwendungen freizusetzen. Darüber hinaus kann der Datenzugriff von nicht-Experten in jeder Größenordnung leicht kontrolliert werden, und die Einführung des neuen Konzepts wird dadurch erleichtert, dass diese Infrastruktur und dieser Prozess auf etablierten Tools aufbauen, die in der Infrastruktur der meisten Softwareunternehmen wahrscheinlich bereits vorhanden und fest integriert sind. Darüber hinaus unterstützt das Verfahren die Einführung mit einfach zu verwendenden, erweiterbaren Vorlagen, die die erforderlichen Werkzeuge integrieren und Startcodes für die verschiedenen Schritte des Prozesses bereitstellen, der von einer Rohdatenquelle zu einem wartbaren und rückverfolgbaren/versionierten Datenartekfakt führt, dass das Training eines KI-Systems, wie zum Beispiel eines Foundationmodel verwendet wird.

Insbesondere ist somit der Hauptunterschied zum Stand der Technik in der engen Integration einer Datenverwaltung und der Quellcodeverwaltung über eine Codeverwaltungsplattform. Der Hauptvorteil dieses Ansatzes ist, dass er eng in den Arbeitsablauf eines Dateningenieurs integriert ist und den Quellcode und die erzeugten Datenartefakte im Hinblick auf Reproduzierbarkeit und Rückverfolgbarkeit einander verbindet.

Des Weiteren ist das Verfahren leichtgewichtig, da es auf einer Code-Management-Plattform aufbaut. Eine Code-Management-Plattform kann in Softwareunternehmen als gegeben angesehen werden und es muss kein zusätzlicher Aufwand für das Hosting und die Wartung einer solchen Plattform betrieben werden. Darüber hinaus können integrierte Funktionen der Codeverwaltungsplattform genutzt werden, um die Verwaltung von Datenartefakten, beispielsweise die Zugriffsverwaltung und gemeinsames Nutzen, und die Automatisierung über continuous integration (CI) - pipelines zu realisieren.

Darüber hinaus bietet das Verfahren eine spezielle Datenplattform für maschinelles Lernen, die eine schnelle und einfache Extraktion beliebiger maschineller Lerndatensätze ermöglicht. In Kombination mit der Homogenisierung der Daten für vertikale Anwendungsfälle können somit siloübergreifende Daten konsolidiert werden, die über Anwendungsfälle hinwegkombiniert und wiederverwendet werden können, um neue Angebote zu ermöglichen.

Die Erfindung ist nicht anwendungsbezogen. Sie könnte jedoch im Zusammenhang mit dem Aufbau eines industriellen Gründungsmodells verwendet werden. Ein Basismodell könnte ein generatives KI-Modell sein (z. B. eine Transformatorarchitektur), das auf der Grundlage der vorliegenden Erfindung auf umfangreiche Mengen von bereichsübergreifenden Sensorzeitsignaldaten trainiert wurde. Diesem Modell kann ein Kontextvektor zugeführt werden, der die Randbedingungen beschreibt, z. B. eine hypothetische Temperaturänderung des Systems, und das Modell kann eine Systemdynamik erzeugen/vorhersagen. Diese Vorhersagen können von einer Steuerung verwendet werden, um Systemparameter eines Geräts zu ändern, z. B. einer Gasturbine, einer CNC-Fräsmaschine oder von Förderbändern in einer Fabrik. Dieses Basismodell könnte auch gemeinsam genutzt und als vortrainiertes Modell verwendet werden, das in einem anderen Anwendungskontext einer Feinabstimmung unterzogen wird.

Gemäß einer vorteilhaften Ausgestaltungsform wird mittels einer weiteren Empfangseinrichtung eine Anwendungsanfrage für die computergestützte Anwendung empfangen und in Abhängigkeit von der Anfrage eine Suche nach homogenisierten Daten in der Datenbank durchgeführt. Beispielsweise kann ein Programmierer/Nutzer für die computergestützte Anwendung eine entsprechende Anwendungsanfrage an die elektronische Recheneinrichtung übermitteln. In Abhängigkeit dieser Anwendungsanfrage wird dann wiederum auf die Datenbank zurückgegriffen oder entsprechende homogenisierte Daten bereitgestellt. Somit kann der Programmierer für die computergestützte Anwendung auf eine Vielzahl homogenisierter Daten zurückgreifen, wodurch eine zuverlässige Programmierung beziehungsweise ein zuverlässiges Anlernen der computergestützten Anwendung möglich ist.

Eine weitere vorteilhafte Ausgestaltungsform sieht vor, dass die homogenisierten Daten für die computergestützte Anwendung aufbereitet werden. Insbesondere können somit auf Basis der Anwendungsanfrage beispielsweise die homogenisierten Daten entsprechend angepasst werden. Hierzu kann beispielsweise vorgesehen sein, dass lediglich für die computergestützte Anwendung relevante Anfragen beziehungsweise homogenisierte Daten bereitgestellt werden. Die homogenisierten Daten, welche weniger relevant für die computergestützte Anwendung sind können beispielsweise nicht mit an die computergestützte Anwendung übertragen werden. Mit anderen Worten findet eine Art Vorverarbeitung der homogenisierten Daten für die computergestützte Anwendung statt. Insbesondere kann somit eine spezifische Anfrage für eine spezifische computergestützte Anwendung durchgeführt werden, und die homogensierten Daten entsprechend aufbereitet werden.

Eine weitere vorteilhafte Ausgestaltungsform sieht vor, dass in Abhängigkeit von der Anwendungsanfrage die homogenisierten Daten aufbereitet werden. Beispielsweise kann ein Programmierer für die computergestützte Anwendung entsprechende Vorgaben für die Trainingsdaten in eine vorgefertigte Maske eingeben. In Abhängigkeit davon wird nun eine Suche für die homogenisierten Daten durchgeführt. Somit können einzelfallspezifisch die Trainingsdaten bereitgestellt werden.

Ferner hat es sich als vorteilhaft erwiesen, wenn die homogenisierten Daten mit Metadaten angereichert werden und die Metadaten abgespeichert werden. Insbesondere werden somit in der ersten Phase die Rohdaten beispielsweise aus mehreren heterogenen Quellen vereinheitlicht und mit den entsprechenden Metadaten beziehungsweise Metainformationen angereichert, die eine effiziente Suche im Hinblick auf den Aufbau von Datensätzen für maschinelles Lernen ermöglichen. Vereinheitlichung bedeutet dabei insbesondere, dass die Daten durch Trennung in Modalitäten, beispielsweise Zeitreihen, Bilder, oder Tabellen, homogenisiert und in einen machinelearning Datenspeicher unter Verwendung einheitlicher Schemata integriert werden. Die Metadaten enthalten grundlegende Informationen über die Instanzen jeder Modalität, zum Beispiel dem Bereich, die Schlüsselwörter und die Eigenschaften der Daten selbst. Außerdem wird dieser Prozess von einem Softwareprojekt, hier und im folgenden auch Datenprojekt, genannt, verwaltet, das die Reproduzierbarkeit dieses Prozesses gewährleistet. In dieser Phase erstellten Daten stehen in keinem Zusammenhang mit einer Anwendung und dienen ausschließlich dem Zweck, Daten für maschinelles Lernen zu vereinheitlichen und die Wiederverwendung und neue Kombinationen von Daten aus verschiedenen Rohdatenquellen zu ermöglichen.

Eine weitere vorteilhafte Ausgestaltungsform sieht vor, dass in Abhängigkeit von den Metadaten eine Suche zum Bereitstellen der Trainingsdaten durchgeführt wird. Beispielsweise können die Metadaten in Form von Schlagwörtern vorliegen. Somit kann durch den Zugriff auf die Metadaten und beispielsweise eine Schlagwortsuche ein entsprechend einfaches Auffinden der homogenisierten Daten realisiert werden. Somit kann mit wenig Rechenaufwand eine entsprechende Datenabfrage durchgeführt werden.

Es hat sich weiterhin als vorteilhaft erwiesen, wenn eine Vielzahl von Rohdaten von einer Vielzahl von Dateneigentümern empfangen wird und die Vielzahl von Rohdaten homogenisiert und abgespeichert werden. Insbesondere kann dies auch kontinuierlich durchgeführt werden, sodass beispielsweise von jeweiligen Dateneigentümern kontinuierlich Rohdaten empfangen werden. Somit kann in der Datenbank eine große Anzahl an homogenisierten Daten abgespeichert werden, wodurch zuverlässig eine Vielzahl von unterschiedlichen computergestützten Anwendungen entsprechend angelernt werden können.

Eine weitere vorteilhafte Ausgestaltungsform sieht vor, dass die Trainingsdaten für eine maschinelle Lernanwendung als computergestützte Anwendung bereitgestellt werden. Beispielsweise kann die maschinelle Lernanwendung in Form einer künstlichen Intelligenz, beispielsweise in Form eines neuronalen Netzwerks bereitgestellt werden. Insbesondere maschinelle Lernanwendungen benötigen eine Vielzahl an Trainingsdaten, um zuverlässige Ergebnisse erreichen zu können. Durch die Bereitstellung der homogenisierten Daten auf der Datenbank kann somit zuverlässig eine maschinelle Lernanwendung entsprechend angelernt werden.

Es hat sich weiter als vorteilhaft erwiesen, wenn bei einer Veränderung der Rohdaten durch den Dateneigentümer automatisierte homogenisierte Daten angepasst werden. Beispielsweise können dann die Rohdaten entsprechend versioniert als homogenisierte Daten abgespeichert werden. Somit ist es ermöglicht, dass zukünftig verbessert auf die aktualisierten beziehungsweise versionierten homogenisierten Daten zurückgegriffen werden kann.

Weiterhin vorteilhaft ist, wenn bei einer Veränderung der homogenisierten Daten eine Versionsnummer mit abgespeichert wird. Insbesondere kann beispielsweise die Versionsnummer mit als Metadaten abgespeichert werden. Somit können entsprechende Anwender beziehungsweise Nutzer der homogenisierten Daten zuverlässig erfassen, um welche Version es sich handelt, und insbesondere ob es sich dabei um aktuelle Daten oder veraltete Daten handelt.

Ebenfalls vorteilhaft ist, wenn bei einer Veränderung der homogenisierten Daten die Veränderung oder computergestützten Anwendung mitgeteilt wird. Beispielsweise können dann auch automatisiert die Trainingsdaten für die computergestützte Anwendung adaptiert werden und der computergestützten Anwendung mitgeteilt werden. Somit erhält die computergestützte Anwendung die aktualisierten homogenisierten Daten und kann somit zuverlässig ein Training durchführen.

Gemäß einer weiteren vorteilhaften Ausgestaltungsform wird zumindest für eine Suche der homogenisierten Daten eine Vorlage für einen Empfänger der Trainingsdaten bereitgestellt. Die Vorlage kann auch als Template bezeichnet werden. Insbesondere kann somit beispielsweise in einer Templatesuchmaske ein Programmierer für die computergestützte Anwendung eine entsprechende Anwendungsanfrage eingeben, und somit auf einfache Art und Weise auf die Datenbank zurückgreifen. Dies ermöglicht insbesondere eine schnelle Verteilung des Verfahrens sowie eine hohe Akzeptanz des Verfahrens bei entsprechenden Anwendern.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit zumindest einem Computerprogrammprodukt nach dem vorhergehenden Aspekt.

Ein nochmals weiterer Aspekt der Erfindung betrifft eine elektronische Recheneinrichtung zum Bereitstellen von Trainingsdaten für eine computergestützte Anwendung, mit zumindest einer Empfangseinrichtung und einer Datenbank, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu gegenständliche Merkmale auf, um entsprechende Verfahrensschritte durchführen zu können.

Hier und im Folgenden kann eine künstliche Intelligenz beziehungsweise ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
FIG 1 ein schematisches Ablaufdiagramm gemäß einer Ausführungsform des Verfahrens; und
FIG 2 ein schematisches Blockschaltbild gemäß einer Ausführungsform einer elektronischen Recheneinrichtung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

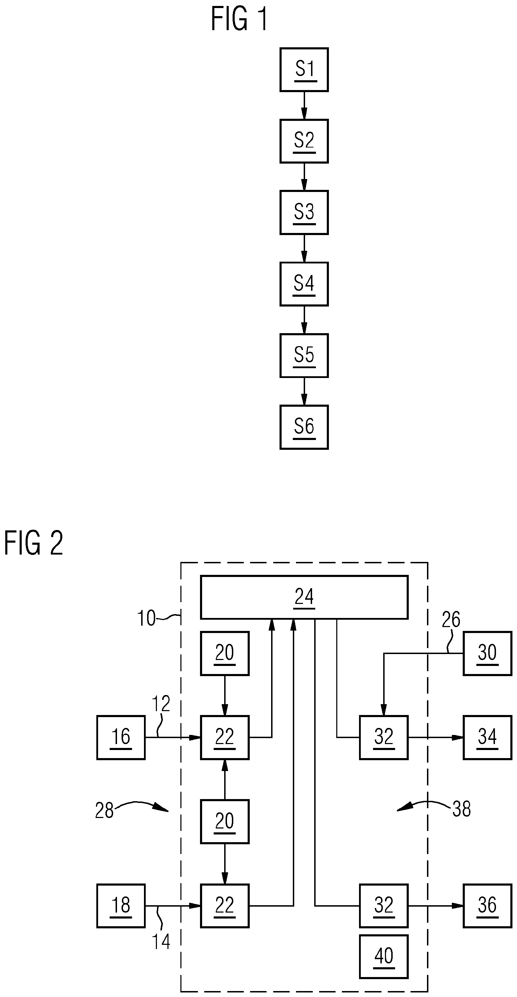

FIG 1 zeigt ein schematisches Ablaufdiagramm gemäß einer Ausführungsform des Verfahrens. Insbesondere wird das Verfahren mittels einer elektronischen Recheneinrichtung 10 (FIG 2) entsprechend durchgeführt.

In einem ersten Schritt S1 erfolgt das Empfangen von Rohdaten 12, 14 von zumindest einem Dateneigentümer 16, 18 (FIG 2). In einem zweiten Schritt S2 können die empfangenen Rohdaten 12, 14 mit Metadaten 20 (FIG 2) angereichert werden.

In einem dritten Schritt S3 erfolgt das Homogenisieren der Rohdaten 12, 14. In einem vierten Schritt S4 werden die homogenisierten Daten 22 in einer Datenbank 24 der elektronischen Recheneinrichtung 10 abgespeichert. In einem fünften Schritt S5 kann eine Anwendungsanfrage 26 von einem Programmierer 30 empfangen werden. In Abhängigkeit von der Anwenderanfrage 26 kann in einem sechsten Schritt S6 vorgesehen sein, dass die homogenisierten Daten 22 dann entsprechend bereitgestellt werden.

FIG 2 zeigt ein schematisches Blockschaltbild gemäß einer Ausführungsform der elektronischen Recheneinrichtung 10. Hierbei ist insbesondere gezeigt, dass zuerst die Rohdaten 12, 14 von den Dateneigentümern 16, 18 mittels einer Empfangseinrichtung 28 der elektronischen Recheneinrichtung 10 empfangen werden. Es erfolgt dann das Homogenisieren der empfangenen Rohdaten 12, 14 mittels der elektronischen Recheneinrichtung 10. Es werden dann die homogenisierten Daten 22 in der Datenbank 24 gespeichert. Dann erfolgt das Bereitstellen der homogenisierten Daten 22 als Trainingsdaten 32 zum Abrufen für eine computergestützte Anwendung 34, 36.

Im folgenden Ausführungsbeispiel ist insbesondere gezeigt, dass ein erster Dateneigentümer 16 erste Rohdaten 12 übermitteln kann und ein zweiter Dateneigentümer 18 zweite Rohdaten 14 übermitteln kann. Ferner sind insbesondere zwei computergestützte Anwendungen 34, 36 gezeigt, welche beispielsweise unterschiedliche sein können. Insbesondere können dann die unterschiedlichen computergestützten Anwendungen 34, 36 unterschiedliche Trainingsdaten 32 benötigen. Bei dem computergestützten Anwendungen 34, 36 handelt es sich insbesondere um Anwendungen zum maschinellen Lernen. Beispielsweise können die computergestützten Anwendungen 34, 36 als künstliche Intelligenz beziehungsweise als neuronales Netzwerk bereitgestellt werden.

Insbesondere kann somit ferner vorgesehen sein, dass beispielsweise mittels einer weiteren Empfangseinrichtung 38 eine entsprechende Anwendungsanfrage 26 für die computergestützte Anwendung 34, 36 empfangen wird und in Abhängigkeit von der Anwendungsanfrage 26 eine Suche nach den homogenisierten Daten 22 in der Datenbank 24 durchgeführt wird. Beispielsweise kann der Programmierer 30 die Anwendungsanfrage 26 erzeugen. Hierbei können die homogenisierten Daten 22 für die computergestützte Anwendung 34, 36 aufbereitet werden. Insbesondere werden dabei die homogenisierten Daten 22 in Abhängigkeit von der Anwendungsanfrage 26 bereitgestellt.

Ferner kann insbesondere vorgesehen sein, dass bei einer Veränderung der Rohdaten 12, 14 durch den Dateneigentümer 16, 18 automatisiert die homogenisierten Daten 22 angepasst werden. Hierzu kann ferner vorgesehen sein, dass bei der Veränderung der homogenisierten Daten 22 eine Versionsnummer mit abgespeichert wird. Ferner kann dabei mit vorgesehen sein, dass bei einer Veränderung der homogenisierten Daten 22 die Veränderung der computergestützten Anwendung 34, 36 mitgeteilt wird. Ebenfalls kann vorgesehen sein, dass zumindest für eine Suche der homogenisierten Daten eine Vorlage 40 für einen Empfänger der Trainingsdaten 32 bereitgestellt wird. Beispielsweise kann der Programmierer 30 über die entsprechende Vorlage 40 eine Suche der homogenisierten Daten 22 durchführen.

Die vorliegenden Figuren zeigen somit ein einheitliches Konzept für eine Infrastruktur und einen Prozess zur Aufbewahrung und gemeinsamen Nutzung von Daten vor, das sich an den aktuellen und zukünftigen Arbeitsabläufen von Dateningenieuren orientiert, aber flexibel genug ist, um in die meisten aktuellen und zukünftigen Datensilos/Dateneigentümern 16, 18 integriert zu werden. Auf diese Weise können siloübergreifende Daten konsolidiert, durchsucht und neu kombiniert werden, um ihr Potenzial für die industrielle KI-Revolution freizusetzen. Darüber hinaus kann der Datenzugriff von Nicht-Experten in jeder Größenordnung leicht kontrolliert werden, und die Einführung des neuen Konzepts wird dadurch erleichtert, dass diese Infrastruktur und dieser Prozess auf etablierten Tools aufbauen, die in der Infrastruktur der meisten Softwareunternehmen wahrscheinlich bereits vorhanden und fest integriert sind. Darüber hinaus können einfach zu verwendende, erweiterbare Vorlagen 40 genutzt werden, die die erforderlichen Werkzeuge integrieren und Startcodes für die verschiedenen Schritte des Prozesses bereitstellen, der von einer Rohdatenquelle zu einem wartbaren und rückverfolgbaren/versionierten Datenartefakt führt, dass für das Training eines KI-Systems, wie z. B. eines Foundation Model, verwendet wird. Ein Überblick über die vorgeschlagene Erfindung ist dargestellt in der FIG 2 und wird in den nächsten Unterabschnitten nochmals ausführlicher erläutert.

Der erste Teil dieses Konzepts zur Vereinheitlichung des Arbeitsablaufs von Data Engineers/Programmierer 30, das flexibel genug ist, um übernommen zu werden, bildet dabei die Unterteilung der Aufgabe eines Machine Learning Data Engineers in zwei Phasen.

In der ersten Phase werden Rohdaten 12, 14 aus mehreren heterogenen Quellen vereinheitlicht und mit Metainformationen/Metadaten 20 angereichert, die eine effiziente Suche im Hinblick auf den Aufbau von Datensätzen für maschinelles Lernen ermöglichen (Datenqualitätsstufe 1). Vereinheitlichung bedeutet dabei, dass die Daten durch Trennung in Modalitäten (z.B. Zeitreihen, Bilder, Tabellen) homogenisiert und in einen Machine Learning Datenspeicher, insbesondere der Datenbank 24, unter Verwendung einheitlicher Schemata integriert werden. Die Metainformationen enthalten grundlegende Informationen über die Instanzen jeder Modalität, wie z. B. den Bereich, die Schlüsselwörter und die Eigenschaften der Daten selbst. Außerdem wird dieser Prozess von einem Softwareprojekt, hier auch Datenprojekt genannt, verwaltet, das die Reproduzierbarkeit dieses Prozesses gewährleistet. Die in dieser Phase erstellten Daten stehen in keinem Zusammenhang mit einer Anwendung und dienen ausschließlich dem Zweck, Daten für maschinelles Lernen zu vereinheitlichen und die Wiederverwendung und Neukombination von Daten aus verschiedenen Rohdatenquellen zu ermöglichen.

In der zweiten Phase baut der Data Engineer einen kuratierten Datensatz auf, um ein KI-System für eine bestimmte Anwendung zu trainieren, z. B. für einen Kundenanwendungsfall oder zum Aufbau eines Basismodells (Datenqualitätsstufe 2). Dabei greift er nicht auf die Rohdaten 12, 14, sondern ausschließlich auf die vereinheitlichten, homogenisierten Daten 22 aus der Datenbank zu. Auch in diesem Fall ist ein Softwareprojekt des Data Engineers die Implementierung der ETL-Pipeline aus dem Machine Learning Data Store. Das resultierende Datenartefakt wird dann ordnungsgemäß verpackt, freigegeben und als Teil der neuesten Version des zugehörigen Datenprojekts freigegeben. Auf diese Weise wird das Datenartefakt nicht nur reproduzierbar, sondern auch nachvollziehbar. Darüber hinaus unterliegt der Zugriff auf das Datenartefakt und seine Dokumentation der Kontrolle des Datenprojekts.

Dabei kann sowohl der Quellcode für Datenprojekte der Datenqualitätsstufe 1 als auch der der Datenqualitätsstufe 2 Teil eines einzigen Quellcode-Repositorys sein oder in mehreren Quellcode-Repositorys organisiert sein.

Einen wesentlichen Teil der Erfindung bildet dabei eine Code-Management-Plattform, die die Hauptschnittstelle zum Arbeitsablauf des Dateningenieurs darstellt. In Softwareunternehmen ist sie in der Regel gut in die Unternehmensinfrastruktur integriert, so dass unternehmensweite Zugriffsrichtlinien implementiert sind. Normalerweise wird der von Data Engineers geschriebene Code in eine solche Plattform integriert. Dabei handelt es sich nicht nur um einen Speicher für den Quellcode, sondern auch um einen Prozess für die strukturierte Pflege und Erweiterung des Quellcodes, insbesondere wenn mehrere Parteien mit demselben Quellcode arbeiten. In unserem Fall wird der Quellcode der Datenprojekte für beide Phasen, d. h. die Erstellung von Datenartefakten der Datenqualitätsstufe 1 und der Datenqualitätsstufe 2, auf einer Codeverwaltungsplattform wie gehostet.

Um alle im Laufe der Zeit gesammelten Daten effektiv zu speichern, ist ein Dienst vorgesehen, den im Folgenden als Datenbank 24 für maschinelles Lernen (MLDS) bezeichnet werden kann und der die folgenden grundlegenden Anforderungen erfüllt. Erstens ist dieser dazu ausgebildet, neben Binärdateien auch strukturierte Metadaten zu speichern. Darüber hinaus ist der Dienst dazu ausgebildet Funktionen zum Filtern von Metadatensätzen und den zugehörigen Binärdateien bereitzustellen, die es ermöglichen, Teilmengen von Daten auf der Grundlage bestimmter Filterbedingungen zu exportieren, die dann wiederum als kuratierte Datensätze in Anwendungen 34, 36 für maschinelles Lernen verwendet zu werden.

Darüber hinaus ist der Dienst dazu ausgebildet Funktionen zu bieten, die den Zugriff auf die gespeicherten Daten entsprechend den von den Dateneigentümern 14, 16 festgelegten Zugriffsberechtigungen einschränken. Was die nichtfunktionalen Anforderungen betrifft, so weist der Dienst eine angemessene Skalierbarkeit auf, um die beträchtlichen Datenmengen (in der Größenordnung von Petabytes) effizient zu verwalten und gleichzeitig die Speicherkosten zu minimieren. Außerdem implementiert der Dienst modernste Sicherheitsmaßnahmen und Datenintegritätsprotokolle, um seine Eignung für die Speicherung sensibler Informationen zu gewährleisten.

Codeverwaltungsplattformen, die in erster Linie für die Speicherung und Verwaltung von Quellcode konzipiert sind, bieten nicht die erforderlichen Suchfunktionen und lassen sich möglicherweise nicht effektiv für die Verarbeitung umfangreicher Datenmengen skalieren. Infolgedessen erfüllen sie nicht alle aufgeführten Anforderungen. In der Tat gibt es derzeit keine gebrauchsfertige Lösung, die alle aufgeführten Anforderungen erfüllt. Es gibt zwar Allzwecklösungen für die Datenspeicherung wie Datenbanken, Blob-Storage-Dienste und Dateisysteme, aber deren Nutzung würde eine zusätzliche Dienstschicht erfordern, die diese Low-Level-Speicherlösungen orchestriert und unter anderem die Zugriffskontrolle übernimmt. Dies ist genau das Problem, das der maschinell lernende Datenspeicher anspricht und löst. Daher wird der Datenspeicher für maschinelles Lernen verwendet, um alle homogenisierten (Qualitätsstufe 1) Datenbestände zu speichern.

Zusammenfassend ist anzumerken, dass die vorgeschlagene Architektur des MLDS die notwendigen Funktionen für die Strukturierung und Speicherung der homogenisierten Daten 22 sowie für die Verwaltung des Zugriffs bietet. Durch die Nutzung hoch skalierbarer Dienste werden die Anforderungen an die Skalierbarkeit vollständig erfüllt. Hinsichtlich der Sicherheit und Datenintegrität wird der MLDS-Dienst nach vertrauenswürdigen Prozessen (ACP) implementiert, wodurch sichergestellt wird, dass alle notwendigen Maßnahmen getroffen wurden.

Das folgende Szenario veranschaulicht, wie homogenisierte Datenbestände gespeichert werden: Angenommen, die Metadaten 20 einer Person, einschließlich typischer Informationen wie Alter, Geschlecht usw., werden in einer Tabellenzeile gespeichert. Ein Porträt der Person ist in einer Bilddatei gespeichert und wird aus dem Metadaten-Dokument referenziert. Zusätzliche Assets wie Stimmproben sind in Audiodateien gespeichert, die ebenfalls mit den Metadaten 20 der Person verknüpft sind. Die Transkripte der Audiodateien werden als Textdateien gespeichert, die mit den Metadaten 20 verbunden sind, sowie als strukturierte Daten (Liste von Wörtern), die vom Metadatendienst verwaltet werden.

Neben den Daten werden allgemeine Kopfzeileninformationen wie die Domäne, Schlüsselwörter und das Betreuerprojekt gespeichert. Dies ermöglicht die Verwendung dieser Attribute bei der Abfrage von Daten. Dies erhöht den Wert und die Zugänglichkeit der gesammelten Datenbestände für eine spätere Wiederverwendung weiter. Dieses Beispiel zeigt, dass sowohl der Dienst als auch das Datenmodell beliebige Anwendungsfälle abdecken und beliebige Datenbestände in einer homogenen Struktur speichern/verwalten können.

Datenprojekte der Datenqualitätsstufe 1 befassen sich mit der Extraktion und Umwandlung von Rohdaten 12, 14 aus heterogenen Datenquellen und dem Laden dieser Daten in die Datenbank 24 für maschinelles Lernen. Dieser ETL-Prozess wird über das CI-Tooling der Code-Management-Plattform implementiert, das bei jeder freigegebenen Version des zugrunde liegenden Quellcodes ausgelöst wird, der die Logik des ETL implementiert, die beliebig sein kann. Dabei hat der Data Engineer die Freiheit, den Tool-Stack zu wählen, mit der einzigen Einschränkung, dass die eigentliche ETL-Pipeline über das CI-Tooling der Code-Management-Plattform ausgelöst werden muss. Bei hohen Workloads kann es notwendig sein, eigene Compute Nodes für die Ausführung der CI-Pipeline einzusetzen. Dies setzt auch voraus, dass der Zugriff auf die Rohdaten 12, 14 automatisierbar ist, z. B. über eine API. Dieses Verfahren stellt sicher, dass nur ausgereifter Quellcode die ETL in reproduzierbarer Weise auslöst.

Datenprojekte der Datenqualitätsstufe 2 befassen sich mit der Extraktion und Umwandlung einheitlicher Daten, insbesondere der homogenisierten Daten 22, aus der Datenbank 24 für maschinelles Lernen und erstellen kuratierte Datensätze, die zum Trainieren und Testen eines KI-Modells, z. B. eines tiefen neuronalen Netzes, verwendet werden. Dieser Datenkonvertierungsprozess wird ebenfalls über das CI-Tooling der Code-Management-Plattform implementiert, das bei jeder freigegebenen Version des zugrunde liegenden Quellcodes, der die Konvertierungslogik implementiert, ausgelöst wird. Auch hier steht es dem Data Engineer frei, einen beliebigen Tool-Stack zu wählen. Und auch hier muss die für die Datenqualitätsstufe 1 verwendete Datenquelle einen automatisierten Zugriff über eine API ermöglichen. Dieses Verfahren stellt sicher, dass nur ausgereifter Quellcode den Konvertierungsprozess in reproduzierbarer Weise auslöst.

Die über die Datenqualitätsstufe 2 erstellten Datensätze werden innerhalb der Codeverwaltungsplattform über die Open-Source-Software DVC beispielsweise eines Drittanbieters gespeichert, die in Bezug auf die Datenverwaltung sehr ähnlich ist. DVC speichert die Metadaten 20 von Dateien und Ordnern mit Zeigern auf ein Daten-Backend, in dem die eigentlichen Dateiinhalte gespeichert werden. DVC unterstützt eine Vielzahl von Backends (in der Regel Objektspeichersysteme, die von öffentlichen Cloud-Anbietern angeboten werden), darunter ein generisches HTTP-Backend, das so konfiguriert werden kann, dass es das generische Paket-Repository nutzt. Auf diese Weise befinden sich der Quellcode, der die Datenqualitätsstufe 2-Konvertierungslogik implementiert, die Metadaten 20 und die Daten im selben Projekt, so dass die Benutzer-/Zugriffsverwaltung einschließlich der Token für CI auch für die Verwaltung des Datenzugriffs gilt.

Das Repository des Datenregistrierungsprojekts weist zwei Hauptzweige auf: main und data. Der Hauptzweig enthält den Code und die zugehörigen Tests für die Erstellung eines Datensatzes, z. B. den Zugriff auf und das Abrufen von Rohdaten 12, 14 aus den Datenquellen, das Bereinigen, Harmonisieren und Integrieren der Daten, das Formatieren und Verpacken der Daten sowie die Durchführung von Qualitätssicherungstests. Der Hauptzweig enthält auch die Konfiguration einer CI/CD-Pipeline, in der die Codetests ausgeführt werden, wenn Commits gepusht werden, sowie einen manuellen CD-Job, der den Datensatz erstellt, aktualisierte Datendateien an das DVC-Daten-Backend pusht und entsprechende Metadatendateien an den Datenzweig überträgt und pusht. Eine Freigabe einer bestimmten Version eines Datensatzes erfolgt durch die Erstellung einer Freigabe mit einem Tag, das auf einen Commit im Datenzweig abzielt.

Der Haupt- und der Datenzweig sollten geschützt werden, um das Löschen und Umschreiben ihrer Historien zu verhindern und um einer CI/CD-Pipeline Zugriff auf geschützte Variablen zu geben. Außerdem sollten Commits nur über den CD-Job und nicht manuell in den Datenzweig übertragen werden.

Im Allgemeinen wird der Zugriff auf die Datenbank 24 für maschinelles Lernen auf Dateneigentümer 16, 16 und Dateningenieure beschränkt, die für die Entwicklung von Datenqualitätsstufe 1- und Datenqualitätsstufe - Datenprojekten verantwortlich sind. Die kuratierten Datensätze, die als Ergebnis der Datenqualitätsstufe 2-Datenprojekte in der Datenregistry gehostet werden, sind für ein breiteres Publikum gedacht, z. B. für Data Scientists, die KI-Modelle erstellen oder Datenanalysen durchführen. Der Zugang und die Sichtbarkeit des Datenqualitätsstufe 2-Datenprojekts und seiner Datenbestände können durch die Wiederverwendung der Zugangsverwaltung der Codeverwaltungsplattform einfach verwaltet werden.

Weiterhin schlägt diese Erfindung einen automatischen Aktualisierungsmechanismus vor, der bei einer Änderung der Daten eine Aktualisierung aller nachgelagerten Artefakte auslöst, die von den Daten abhängen. Wenn beispielsweise ein Dateneigentümer 16, 18 neue Daten hinzufügt, die in der Datenbank 24 für maschinelles Lernen geladen werden, dann sollte diese Änderung der abhängigen Daten von den abhängigen Datenqualitätsstufen 2-Datenprojekten registriert werden und automatisch eine neue kuratierte Datensatzfreigabe mit einem geeigneten Versionsinkrement auslösen. Diese neue Freigabe kann abhängige, nachgelagerte Modelle dazu veranlassen, die zugehörigen Modellartefakte neu zu trainieren und mit einem geeigneten Versionsinkrement freizugeben. Ein Hilfsmittel zur Realisierung dieses Vorgangs sind geplante Jobs innerhalb der Code-Management-Plattform, die bei bestimmten vordefinierten Metriken und entsprechenden Schwellenwerten diesen Aktualisierungsprozess auslösen.

Die Reproduzierbarkeit und Rückverfolgbarkeit wird in dieser Erfindung hauptsächlich durch die Codeverwaltungsplattform gewährleistet, da sie die Historie des Quellcodes und des CI-Prozesses, der die Datenartefakte erstellt hat, verfolgt. Da die Datenqualitätsstufe 2-Datenartefakte über Datenversionierungstools wie DVC versioniert werden, sind die Datenqualitätsstufe 2-Datenartefakte ebenfalls reproduzierbar und nachvollziehbar. Rückverfolgbarkeit und Reproduzierbarkeit von Datenqualitätsstufe 1-Datenartefakten können gegeben sein, wenn der Datenspeicher für maschinelles Lernen die Versionierung unterstützt und der aus den verschiedenen Datenquellen extrahierte Datendump einen klar definierten Umfang hat und reproduzierbar ist. Dies ist jedoch kein Erfordernis der vorliegenden Erfindung.

Da die vorgeschlagene Erfindung in Bezug auf die vom Dateningenieur verwendeten Werkzeuge recht flexibel ist, kann sie auch erweitert werden, z. B. durch Hinzufügen zusätzlicher Werkzeuge in der Validierungsphase von Datenqualitätsstufe 2-Datenprojekten, wie z. B. die Erkennung von Verteilungen.

Die Einführung eines neuen Workflows ist immer mit einer Adoptionsbarriere verbunden, da Dateningenieure ihre Komfortzone verlassen und neue Werkzeuge, wie Continuous Integration Pipelines (CI), den Datenspeicher für maschinelles Lernen und Werkzeuge für das Lebenszyklusmanagement von Datenartefakten, annehmen und verstehen müssen. Um diese Akzeptanzbarriere zu senken, schlägt die Erfindung einen Code-Templating-Ansatz vor, , insbesondere die Vorlage 40, bei dem anhand eines kurzen Fragebogens eine Code-Vorlage für Datenqualitätsstufe 1- oder/und Datenqualitätsstufe 2-Datenprojekte generiert wird, die als Starter-Code dienen, in den dieses Tooling bereits ordnungsgemäß integriert ist. Zum Beispiel bietet eine Codevorlage für Datenqualitätsstufe 2-Datenprojekte einen Startcode für das Abrufen von Rohdaten 12, 14 aus gängigen Datenquellen, einen Stub für die Konvertierung von Rohdaten 12, 14 in ein gängiges Zielformat, eine CLI und ein Testsuite-Skelett sowie die Integration gängiger Codequalitätswerkzeuge, eine CI-Konfiguration und einen Startcode für die Dokumentation. Auf diese Weise muss ein Data Engineer hauptsächlich die Konvertierungslogik implementieren, ohne dass er über tiefgreifende Kenntnisse der Boilerplate und der detaillierten Integration in die Code-Management-Plattform verfügen muss.

## Patentansprüche

1. Verfahren zum Bereitstellen von Trainingsdaten (32) für eine computergestützte Anwendung (34, 36) mittels einer elektronischen Recheneinrichtung (10), mit den Schritten:
- Empfangen von Rohdatendaten (12, 14) von zumindest einem Dateneigentümer (16, 18) mittels einer Empfangseinrichtung (28) der elektronischen Recheneinrichtung (10); (S1)
- Homogenisieren der empfangenen Rohdaten (12, 14) mittels der elektronischen Recheneinrichtung (10); (S3)
- Speichern der homogenisierten Daten (22) in einer Datenbank (24) der elektronischen Recheneinrichtung (10); (S4) und
- Bereitstellen der homogenisierten Daten (22) als Trainingsdaten (32) zum Abrufen für eine computergestützte Anwendung (34, 36) mittels der elektronischen Recheneinrichtung (10). (S5)

2. Verfahren nach Anspruch 1, **dadurch gekennzeichnet, dass** mittels einer weiteren Empfangseinrichtung (38) eine Anwendungsanfrage (26) für die computergestützte Anwendung (34, 36) empfangen wird und in Abhängigkeit von der Anwendungsanfrage (26) eine Suche nach homogenisierten Daten (22) in der Datenbank (24) durchgeführt wird.

3. Verfahren nach Anspruch 1 oder 2, **dadurch gekennzeichnet, dass**
die homogenisierten Daten (22) für die computergestützte Anwendung (34, 36) aufbereitet werden.

4. Verfahren nach Anspruch 2 und 3, **dadurch gekennzeichnet, dass**
in Abhängigkeit von der Anwendungsanfrage (26) die homogenisierten Daten (22) aufbereitet werden.

5. Verfahren nach einem der vorhergehenden Ansprüchen, **dadurch gekennzeichnet, dass**
die homogenisierten Daten (22) mit Metadaten (20) angereichert werden und mit den Metadaten (20) abgespeichert werden.

6. Verfahren nach Anspruch 5, **dadurch gekennzeichnet, dass** in Abhängigkeit von den Metadaten (20) eine Suche zum Bereitstellen der Trainingsdaten (32) durchgeführt wird.

7. Verfahren nach einem der vorhergehenden Ansprüche, **dadurch gekennzeichnet, dass**
eine Vielzahl von Rohdaten (12, 14) von einer Vielzahl von Dateneigentümern (16, 18) empfangen wird und die Vielzahl von Rohdaten (12, 14) homogenisiert und abgespeichert wird.

8. Verfahren nach einem der vorhergehenden Ansprüche, **dadurch gekennzeichnet, dass**
die Trainingsdaten (32) für eine maschinelle Lernanwendung als computergestützte Anwendung (34, 36) bereitgestellt werden.

9. Verfahren nach einem der vorhergehenden Ansprüche, **dadurch gekennzeichnet, dass**
bei einer Veränderung der Rohdaten (12,14) durch den Dateneigentümer (16, 18) automatisiert die homogenisierten Daten (22) angepasst werden.

10. Verfahren nach Anspruch 9, **dadurch gekennzeichnet, dass** bei einer Veränderung der homogenisierten Daten (22) eine Versionsnummer mit abgespeichert wird.

11. Verfahren nach Anspruch 9 oder 10, **dadurch gekennzeichnet, dass**
bei einer Veränderung der homogenisierten Daten (22) die Veränderung der computergestützten Anwendung (34, 36) mitgeteilt wird.

12. Verfahren nach einem der vorhergehenden Ansprüche, **dadurch gekennzeichnet, dass**
zumindest für eine Suche der homogenisierten Daten (22) eine Vorlage (40) für einen Empfänger der Trainingsdaten (32) bereitgestellt wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Bereitstellen von Trainingsdaten (32) für eine computergestützte Anwendung (34,36), mit zumindest einer Empfangseinrichtung (28) und einer Datenbank (24), wobei die elektronische Recheneinrichtung (10) zum Durchführen eines Verfahrens nach einem der Ansprüche 1 bis 12 ausgebildet ist.
